# EUROPEAN PATENT APPLICATION

(11) **EP 4 328 591 A1**
(43) Date of publication of application: **28.02.2024**
(21) Application number: 22791385.2
(22) Date of filing: 08.03.2022
(51) Int. Cl.: G01N 35/00, G01N 35/02

(54) **AUTOMATIC ANALYSIS DEVICE AND ANALYSIS METHOD**

(30) Priority: 19.04.2021 JP 2021070642
(71) Applicant: HITACHI HIGH-TECH CORPORATION, Tokyo 105-6409 (JP)
(72) Inventor: DENAWA Masahide, Tokyo 105-6409 (JP); KIKUCHI Satoshi, Tokyo 105-6409 (JP); TANOUE Hidetsugu, Tokyo 105-6409 (JP)
(74) Representative: Strehl Schübel-Hopf & Partner
(86) International application number: PCT/JP2022/009868
(87) International publication number: WO 2022/224604

(57) **Abstract**

To provide a technique that suppresses the degradation of analysis accuracy and the contamination of an analyzer caused by an abnormality in a stirring device. An automatic analyzer of the present disclosure includes a stirring device having a rod-shaped member that stirs a stirred solution and a power source that applies power to the rod-shaped member, a sensor that detects vibrations of the stirring device, and a processor that determines a state of the stirring device based on a detection signal of the vibrations from the sensor. The processor calculates a feature value of the vibrations based on the detection signal of the vibrations, and the processor determines that the rod-shaped member bends when the feature value of the vibrations is a first predetermined value or more.

## Description

### Technical Field

The present disclosure relates to an automatic analyzer and an analysis method.

### Background Art

A stirring mechanism of the automatic analyzer is used for stirring a reagent, a sample, a reaction solution of a reagent and a sample, and the like, and serves an important function in the cause of analysis processing. Generally, the stirring mechanism of the automatic analyzer performs stirring in which a stirring member in a rod shape is immersed in a stirred solution for rotation. Here, a technique that suppresses the degradation of analysis accuracy caused by stirring processes performed in the automatic analyzer (see Patent Literature 1).

### Citation List

### Patent Literature

Patent Literature 1: Japanese Unexamined Patent Application Publication No. 2016-24044

### Summary of Invention

### Technical Problem

Patent Literature 1 describes, as vibrations that might affect analyzed results in the automatic analyzer, vibrations caused by earthquakes, travels of large vehicles and railroads, the operation of construction machines, and the like. However, Patent Literature 1 does not consider analyzer failures including displacement, looseness, and bending, caused by attaching the components of a stirring device, for example.

Therefore, the present disclosure is to provide a technique that suppresses the degradation of analysis accuracy and the contamination of an analyzer caused by an abnormality in a stirring device.

### Solution to Problem

In order to solve the problems, an automatic analyzer of the present disclosure includes a stirring device having a rod-shaped member that stirs a stirred solution and a power source that applies power to the rod-shaped member, a sensor that detects vibrations of the stirring device, and a processor that determines a state of the stirring device based on a detection signal of the vibrations from the sensor. In the automatic analyzer, the processor calculates a feature value of the vibrations based on the detection signal of the vibrations, and the processor determines that the rod-shaped member bends when the feature value of the vibrations is a first predetermined value or more.

Further features concerning the disclosure will be clarified from the content of this description and the accompanying drawings. The embodiment of the disclosure is achieved by elements and combinations of various elements, and the following detailed description and aspects of the accompanying claims. The content of this description merely shows typical examples and is not intended to limit the claims or application examples of the disclosure in any sense.

The present specification incorporates the content of the disclosure of Japanese Patent Application No. 2021-070642, which is based on the present application.

### Advantageous Effects of Invention

According to the technique of the present disclosure, it is possible to suppress the degradation of analysis accuracy and the contamination of the analyzer caused by an abnormality in the stirring device. The problems, configurations, and effects other than the ones described above will be apparent from an embodiment below.

### Brief Description of Drawings

Fig. 1 is a top view schematically illustrating the overall structure of an automatic analyzer according to a first embodiment.
Fig. 2 is a side view illustrating the configuration example of a stirring mechanism and a vessel holding unit.
Fig. 3 is a flowchart illustrating the outline of a determination process for an abnormality of the stirring mechanism executed by the operation control unit.
Fig. 4 is a functional block diagram of components related to the determination of an abnormality of the stirring mechanism.
Fig. 5 is a flowchart illustrating an abnormality identification process executed by an operation control unit.
Fig. 6 is a diagram illustrating the state of the stirring mechanism in the case in which a rod-shaped member is bent.
Fig. 7 is a diagram illustrating the state of the stirring mechanism in the case in which the connection between a connecting part and a rod-shaped member has an abnormality.
Fig. 8 is a diagram illustrating the state of the stirring mechanism in the case in which the connection between a protector and a base unit has an abnormality. Description of Embodiments

### First Embodiment

### <Configuration Example of automatic analyzer>

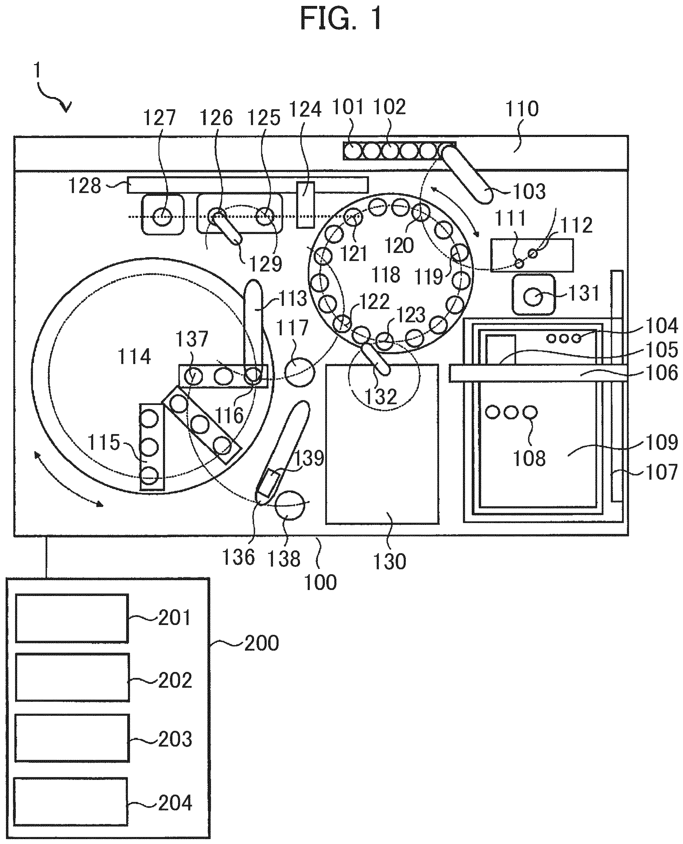

Fig. 1 is a top view schematically illustrating the overall structure of an automatic analyzer 1 according to the first embodiment. As illustrated in Fig. 1, the automatic analyzer 1 includes a housing 100, a sample rack 101, a sample vessel 102, a sample probe 103, a sample tip 104, a first reaction vessel transport unit 105, a lateral movement mechanism 106, a vertical movement mechanism 107, a reaction vessel 108, a reaction vessel rack 109, a sample transport unit 110, a sample tip mounting unit 111, a disposal unit 112, a reagent probe 113, a reagent disk 114, a reagent bottle 115, a reagent probe solution holding unit 117, a reaction vessel installation unit 118, a second reaction vessel transport unit 124, a reaction vessel solution holding unit 125, a second lateral movement mechanism 128, a washing reagent probe 129, an analysis unit 130, a reaction solution aspiration probe 132, a stirring mechanism 136, a vessel holding unit 138, and a controller 200.

The housing 100 has a nearly rectangular parallelepiped shape, and houses a substrate, not illustrated, a passage, and the like are housed inside. In the following, in the description in Fig. 1, in some cases, a direction in parallel with the direction of the long side of the top surface of the housing 100 is referred to as a lateral direction, and a direction in parallel with the direction of the short side of the top surface of the housing 100 is referred to as a vertical direction.

The sample transport unit 110 transports the sample rack 101 that holds the sample vessel 102. The sample vessel 102 houses a sample. The transport method for the sample vessel 102 uses a disk, for example, instead of using the sample rack 101.

The reaction vessel rack 109 holds an unused sample tip 104 and an unused reaction vessel 108. The unused sample tip 104 and the unused reaction vessel 108 can be installed on the reaction vessel rack 109 by a user of the automatic analyzer 1 . The sample tip 104 and the reaction vessel 108 can be disposables.

The first reaction vessel transport unit 105 has the lateral movement mechanism 106 and the vertical movement mechanism 107. The lateral movement mechanism 106 grips the reaction vessel 108, and moves the reaction vessel 108 in the lateral direction. The lateral movement mechanism 106 is movable in the vertical direction by the vertical movement mechanism 107. The first reaction vessel transport unit 105 transports the reaction vessel 108 from the reaction vessel rack 109 to a first reaction vessel installation position 119 of the reaction vessel installation unit 118 by the drive of the lateral movement mechanism 106 and the vertical movement mechanism 107. Moreover, the first reaction vessel transport unit 105 transports the sample tip 104 from the reaction vessel rack 109 to the sample tip mounting unit 111. The sample tip mounting unit 111 is a site where the sample tip 104 is temporarily held.

The reaction vessel installation unit 118 has a disk-like shape, and holds a plurality of reaction vessels 108 along the circumferential direction. The reaction vessel installation unit 118 is turnably formed, and moves the reaction vessel 108 installed at the first reaction vessel installation position 119 to a predetermined position (a sample dispensing position 120, a second reaction vessel installation position 121, a reagent dispensing position 122 or a reaction solution aspiration position 123) by rotation. The reaction vessel installation unit 118 functions as an incubator, and its temperature is controlled at a constant temperature such as 37°C.

The sample probe 103 has an arm that turns together with the rotation of a rotating shaft provided at one end part of the arm and a pipette provided at the other end part of the arm (not illustrated in Fig. 1). The sample probe 103 mounts the sample tip 104 on the tip end of the pipette (a rod-shaped member) in the sample tip mounting unit 111. The sample probe 103 aspirates a sample in the sample vessel 102 into the inside of the sample tip 104, and dispenses the sample into the reaction vessel 108 at the sample dispensing position 120. After that, the sample probe 103 discards a used sample tip 104 in the disposal unit 112.

The disposal unit 112 has a disposal hole provided on the top surface of the housing 100 and a disposal box disposed on the lower part of the disposal hole, and accumulates the sample tip 104 and the reaction vessel 108, which are discarded. When the disposal box becomes filled, the user can draw the disposal box to discard the content.

The reagent disk 114 has a nearly circular shape in a top view, and stores a plurality of reagent bottles 115 along the radial direction. The reagent disk 114 is turnably formed, and moves the reagent bottle 115 to a predetermined position (a reagent aspiration position 116 or a stirring position 137) by rotation.

The reagent probe 113 has an arm that turns together with the rotation of a rotating shaft provided at one end part of the arm and a pipette (not illustrated in Fig. 1) provided at the other end part of the arm. The reagent probe 113 aspirates a reagent from the reagent bottle 115 of the reagent aspiration position 116 to the pipette (a rod-shaped member), and dispenses the reagent into the reaction vessel 108 above the reagent dispensing position 122.

The reagent probe solution holding unit 117 houses a washing fluid that washes the pipette of the reagent probe 113.

The stirring mechanism 136 has an arm (a base unit described later) that turns together with the rotation of a rotating shaft provided at one end part a rod-shaped member (not illustrated in Fig. 1) provided at the other end part of the arm. The rod-shaped member can have a paddle shape or a spiral shape, for example. The stirring mechanism 136 stirs a reagent at the stirring position 137 using the rod-shaped member. The stirring mechanism 136 has a sensor 139 like a vibration sensor, for example. The sensor 139 detects vibrations of the stirring mechanism 136. The sensor 139 may be a sensor including an image sensor, a sound wave sensor, and the like, for example. The vessel holding unit 138 houses a washing fluid that washes the rod-shaped member of the stirring mechanism 136.

The second reaction vessel transport unit 124 grips the reaction vessel 108, and moves the reaction vessel 108 in the lateral direction by the second lateral movement mechanism 128. The second reaction vessel installation position 121, the reaction vessel solution holding unit 125, and a reaction vessel washing position 126 are disposed on a straight line along the long direction of the automatic analyzer 1 (the lateral direction). The second reaction vessel transport unit 124 transports the reaction vessel 108 from the second reaction vessel installation position 121 to the second reaction vessel installation position 121, the reaction vessel solution holding unit 125, or the reaction vessel washing position 126. The reaction vessel solution holding unit 125 houses a buffer solution that washes the reaction vessel 108.

The washing reagent probe 129 has an arm that turns together with the rotation of a rotating shaft provided at one end part of the arm and a pipette (not illustrated in Fig. 1) provided at the other end part of the arm. The washing reagent probe 129 aspirates the buffer solution in the reaction vessel solution holding unit 125 into the pipette (the rod-shaped member), and discharges the buffer solution at the reaction vessel washing position 126.

The reaction solution aspiration probe 132 has an arm that turns together with the rotation of a rotating shaft provided at one end part of the arm and a pipette (not illustrated in Fig. 1) provided at the other end part of the arm. The reaction solution aspiration probe 132 aspirates a reaction solution from the reaction vessel 108 at the reaction solution aspiration position 123 to the pipette(the rod-shaped member), and delivers the reaction solution to the analysis unit 130.

The analysis unit 130 detects the physical properties of the reaction solution. Examples of the physical properties include a light emission quantity, a scattered light quantity, a transmitted light quantity, a current value, a voltage value, and the like, for example, but are not limited to these. Note that the analysis unit 130 may perform analysis while holding the reaction solution in the reaction vessel 108.

The controller 200 has an operation control unit 201, an analysis control unit 202, a user interface 203, and a data storage unit 204. The controller 200 is a computer device, and the operation control unit 201 and the analysis control unit 202 can be achieved as processing modules executed by the processor of the controller 200.

The operation control unit 201 controls the operation of the components of the automatic analyzer 1. Although the detail will be described later, the operation control unit 201 receives an input of the detection signal of the sensor 139 provided on the stirring mechanism 136, and determines an abnormality of the stirring mechanism 136 based on the detection signal. The analysis control unit 202 receives an input of the detection signal of the physical property of the reaction solution from the analysis unit 130, and performs the qualitative analysis or quantitative analysis of substances to be measured in the sample based on the detection signal.

The user interface 203 can be achieved by input devices such as a mouse, a keyboard, a microphone, and a touch panel, and an output device such as a display, a touch panel, and a speaker.

The data storage unit 204 can be achieved by an internal memory such as a ROM, and a RAM, and a storage device such as an external storage. The data storage unit 204 stores various items of data used for processing by the controller 200.

### <Operation example of automatic analyzer>

Next, an example of the operation of the automatic analyzer 1 when a measurement target material in a sample by antigen-antibody reactions using two types of reagents will be described. The operations of the components of the automatic analyzer 1 are controlled by the controller 200, and in the following, the description will be made as the components are main subjects of the operation for simplifying the description.

First, the first reaction vessel transport unit 105 transports the reaction vessel 108 in the reaction vessel rack 109 to the first reaction vessel installation position 119 of the reaction vessel installation unit 118. Moreover, the first reaction vessel transport unit 105 transports the sample tip 104 in the reaction vessel rack 109 to the sample tip mounting unit 111.

Subsequently, the sample probe 103 turns, and mounts the sample tip 104 on the tip end of the probe in the sample tip mounting unit 111. The sample transport unit 110 transports the sample rack 101 to the aspiration position of the sample probe 103. The sample probe 103 aspirates a sample in the sample vessel 102.

The reaction vessel installation unit 118 turns, and moves the reaction vessel 108 installed at the first reaction vessel installation position 119 to the sample dispensing position 120. The sample probe 103 turns after aspirating the sample, and discharges the sample in a prescribed solution quantity into the reaction vessel 108 at the sample dispensing position 120. After discharging the sample, the sample probe 103 further turns, moves the pipette above the disposal unit 112, and drops the sample tip 104 inside the disposal unit 112.

Subsequently, the stirring mechanism 136 turns, and stirs the second reagent in the reagent bottle 115 at the stirring position 137. After stirring, the stirring mechanism 136 turns from the stirring position 137, and washes the rod-shaped member by vertically moving the rotating shaft in the vessel holding unit 138.

The reagent disk 114 turns, and moves the reagent bottle 115 that houses the first reagent to the reagent aspiration position 116. The reagent probe 113 aspirates the first reagent from the reagent bottle 115 of the reagent aspiration position 116. Subsequently, the reaction vessel installation unit 118 turns, and moves the reaction vessel 108 into which the sample is dispensed from the sample dispensing position 120 to the reagent dispensing position 122.

Subsequently, the reagent probe 113 turns, and discharges the first reagent in a prescribed solution quantity at the reagent dispensing position 122. The first reagent includes an antibody that specifically bonds with a specific antigen in the sample. In the reaction vessel 108 installed in the reaction vessel installation unit 118, the sample and the first reagent cause an antigen-antibody reaction. The antibody in the first reagent is in a state in which the antibody bonds with a fluorescent substance. After a lapse of a certain period of time, during a period in which the antigen-antibody reaction sufficiently proceeds, an operation in which another sample is dispensed into a new reaction vessel is executed similarly to above. After the antigen-antibody reaction sufficiently proceeds, the reaction vessel installation unit 118 again moves the reaction vessel 108 to the reagent dispensing position 122.

Subsequently, the reagent probe 113 aspirates the second reagent from the reagent bottle 115, and dispenses the second reagent into the reaction vessel 108 at the reagent dispensing position 122. Here, the reagent bottle of the first reagent and the reagent bottle of the second reagent may be individually provided.

The second reagent includes an antibody that specifically bonds alone with the antigen in the sample. The antibody in the second reagent is in a state in which the antibody bonds with magnetic particles in advance. A predetermined period of time elapses, the antigen-antibody reaction proceeds to a certain degree, and thus a sufficient amount of a final reactant that bonds with a magnetic particle and a fluorescent illuminant is generated in the antigen present in the sample.

Subsequently, the reaction vessel installation unit 118 turns, and moves the reaction vessel 108 into which the sample, the first reagent, and the second reagent are dispensed to the second reaction vessel installation position 121. The second reaction vessel transport unit 124 moves the reaction vessel 108 from the second reaction vessel installation position 121 to the reaction vessel washing position 126.

Using the magnetic properties of the magnetic particles that bond with the antibody in the reaction solution in the reaction vessel 108 at the reaction vessel washing position 126, the reaction solution is discarded in a state in which the magnetic particles are trapped in the vessel by a magnet installed outside the reaction vessel 108. As a result, B/F separation is performed in which substances derived from the sample other than the antigen are washed and removed and the final reactant alone remains in the reaction solution.

The washing reagent probe 129 aspirates a buffer solution from the reaction vessel solution holding unit 125, and discharges the buffer solution at the reaction vessel washing position 126. Subsequently, the second reaction vessel transport unit 124 moves the reaction vessel 108 to the second reaction vessel installation position 121 of the reaction vessel installation unit 118.

Subsequently, the reaction vessel installation unit 118 turns, and moves the reaction vessel 108 to the reaction solution aspiration position 123. The reaction solution aspiration probe 132 aspirates the reaction solution from the reaction vessel 108 at the reaction solution aspiration position 123. Next, the reaction solution aspiration probe 132 delivers the reaction solution to the analysis unit 130.

The analysis unit 130 detects the light emission quantity of the fluorescent material in the reaction solution, and outputs a detection signal to the analysis control unit 202. The analysis control unit 202 performs analysis based on the light emission quantity of the fluorescent material, and outputs the analyzed result to the output device of the user interface 203. The analysis control unit 202 performs analysis using information (prescribed solution quantity information) expressing the amount of the sample and the principle that the light emission quantity of the fluorescent material is proportional to the number of antigens, for example.

The description up to this is the example of the unit of one-time analysis operation in order to measure the sample. The automatic analyzer 1 can perform a plurality of analysis operations at a time. Moreover, the automatic analyzer 1 allows the operation control unit 201 to control operations in a pipeline manner such that a plurality of analysis operations can be performed at the same time. With such a configuration, it is possible to smoothly perform the analysis process of a plurality of samples.

Here, a period of time that takes the analysis operation will be described. The one-time analysis operation includes a sample dispensing process, a first reagent dispensing process, a second reagent dispensing process, a washing process, and an analysis process, and the one-time analysis operation takes a considerable period of time. For example, suppose that the one-time analysis operation takes ten minutes, when a plurality of the analysis operations is sequentially executed, it takes 30 minutes in order to perform the analysis operation three times.

### <Configuration example of stirring mechanism>

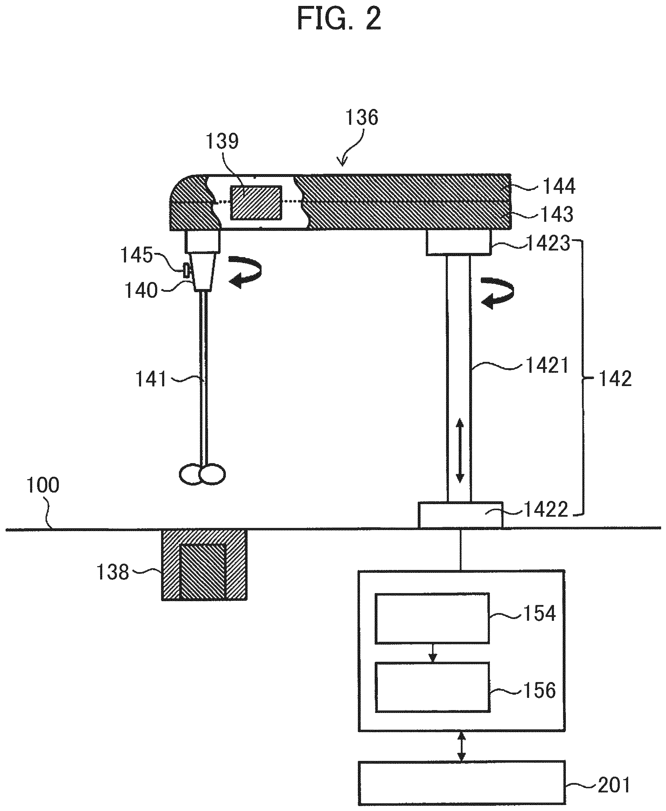

Fig. 2 is a side view illustrating examples of configurations of the stirring mechanism 136 and the vessel holding unit 138. The stirring mechanism 136 includes the sensor 139, a connecting part 140, a rod-shaped member 141, a moving mechanism 142 (power source), a base unit 143 (arm), a protector 144, a connecting component 145, a drive unit 154 (power source), and a detector 156.

The connecting part 140 grips the rod-shaped member 141 to connect to the base unit 143. The connecting part 140 is applied with rotational force by a rotational driving source (a motor and the like) provided inside the base unit 143, and the connecting part 140 is turnably formed. The connecting component 145 fixes the rod-shaped member 141 to the connecting part 140.

The tip end part of the rod-shaped member 141 is provided with a paddle. The tip end part of the rod-shaped member 141 may have a screw shape. The rod-shaped member 141 is immersed in the stirred solution to stir the stirred solution.

The sensor 139 is provided inside the base unit 143. The sensor 139 detects vibrations generated by the operation of the stirring mechanism 136. Since vibrations are rarely affected by the influence of changes in environments (use conditions) such as atmospheric pressures and temperatures, variations in detection accuracy are small regardless of the use conditions. Therefore, the detection of vibrations can achieve stable detection accuracy also under various use conditions. The mounting position of the sensor 139 only has to be a position at which the vibrations of the stirring mechanism 136 are detectable, which is not limited to the position illustrated in Fig. 2. For example, the sensor 139 may be disposed near the vessel holding unit 138. In this case, for example, vibrations caused by the rod-shaped member 141 slightly touching the inner wall surface of the vessel holding unit 138 due to the bend of the rod-shaped member 141 can be detected. Alternatively, a change in the water flow of the solution inside the vessel holding unit 138 can also be detected as vibrations. However, since the position of the sensor 139 is near the rod-shaped member 141 of the stirring mechanism 136, vibrations caused by the stirring operation can be more accurately detected.

The protector 144 functions as a cover that protects the upper part of the base unit 143.

The top surface of the vessel holding unit 138 is present on the same plan as the top surface of the housing 100, and the solution (washing fluid) held by the vessel holding unit 138 is located inside the housing 100. However, the top surface of the vessel holding unit 138 may be located above or below the top surface of the housing 100.

The moving mechanism 142 has a rotating shaft 1421, a bearing 1422, and a fixing part 1423. The rotating shaft 1421 is fixed to the base unit 143 by the fixing part 1423, and the rotating shaft 1421 turns to cause the base unit 143 to turn as well. The bearing 1422 is fixed to the top surface of the housing 100, has a hole through which the rotating shaft 1421 penetrates, and vertically, movably supports the rotating shaft 1421.

The drive unit 154 controls the drive of the moving mechanism 142 and the drive of the rotational driving source of the connecting part 140. The drive unit 154 is formed of an actuator, a motor, and the like, for example, and rotates or vertically moves the rotating shaft 1421. The detector 156 detects the state of the drive unit 154. The drive unit 154 and the detector 156 is provided inside the housing 100.

### <Abnormality detection method for stirring mechanism>

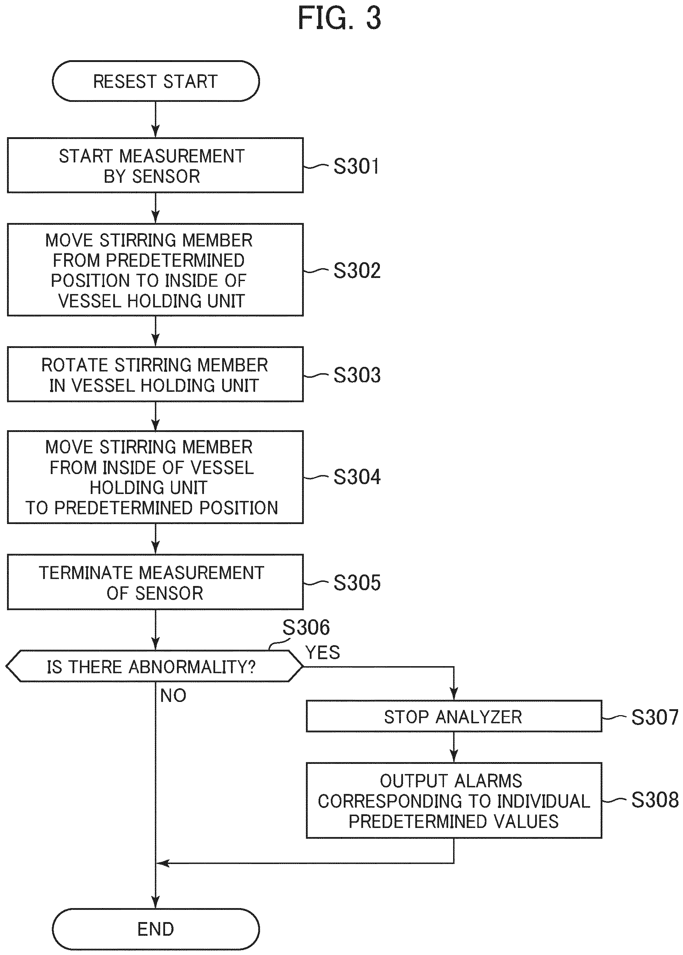

Fig. 3 is a flowchart illustrating the outline of a determination process for an abnormality of the stirring mechanism executed by the operation control unit 201. The process in Fig. 3 is executed as the reset operation of the stirring mechanism 136 when the automatic analyzer 1 performs the reset operation after performing maintenance including replacement, cleaning, and the like of the rod-shaped member 141, for example.

### (STEP S301)

The sensor 139 starts the measurement of the vibrations of the stirring mechanism 136, and the operation control unit 201 receives an input of the detection signal of vibrations of the sensor 139.

### (STEP S302)

The operation control unit 201 drives the drive unit 154, and moves the rod-shaped member 141 from a predetermined position to above the vessel holding unit 138. After that, the operation control unit 201 lowers the rotating shaft 1421 to move the rod-shaped member 141 into the vessel holding unit 138. At this time, the operation control unit 201 may simultaneously perform operations such as washing or drying of the rod-shaped member 141 in the midway point of moving the rod-shaped member 141.

### (STEP S303)

The operation control unit 201 drives the drive unit 154 to rotate the connecting part 140, and rotates the rod-shaped member 141 inside the vessel holding unit 138. At this time, the vessel holding unit 138 may house the washing fluid, or may perform washing by rotating the rod-shaped member 141. Alternatively, drying may be performed by rotating the rod-shaped member 141.

### (STEP S304)

The operation control unit 201 drives the drive unit 154 to elevate the rotating shaft 1421, then rotates the rotating shaft 1421, and moves the rod-shaped member 141 to a predetermined position. The operation control unit 201 may simultaneously perform operations such as washing or drying of the rod-shaped member 141 in the midway point of moving the rod-shaped member 141.

### (STEP S305)

The sensor 139 terminates the measurement of vibrations, and the operation control unit 201 stops the reception of the detection signal from the sensor 139. As described above, when vibrations occur due to an abnormality such as the mechanism failure of the stirring mechanism 136 at the time of the rotation operation of the rod-shaped member 141, the vibrations are reflected in the detection signal of the sensor 139.

### (STEP S306)

The operation control unit 201 determines whether the stirring mechanism 136 has an abnormality based on the detection signal of the acquired vibrations. Although the detail of the abnormality detection method will be described later, in a brief description, an abnormality is determined whether the size of the power spectrum in areas where the frequencies of vibrations are generated is a predetermined threshold or more. When it is determined that there is an abnormality (YES), the process goes to Step S307. When it is determined that there is no abnormality (NO), the process terminates

### (STEP S307)

When the stirring mechanism 136 has an abnormality, the operation control unit 201 stops the operation of the automatic analyzer 1.

### (STEP S308)

to the type of abnormality, and outputs the alarm to the output device of the user interface 203. Examples of the alarm include a warning indication displayed on a display, a warning sound emitted from a speaker, and the like.

### <Abnormality identification method>

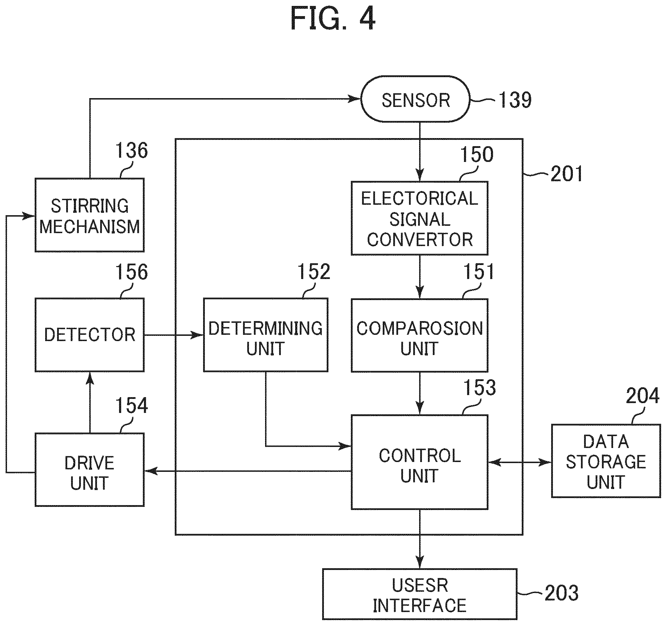

Fig. 4 is a functional block diagram of components related to the determination of an abnormality of the stirring mechanism 136. As illustrated in Fig. 4, the operation control unit 201 has an electrical signal converter 150, a comparison unit 151, a determining unit 152, and a control unit 153.

The electrical signal converter 150 receives an input of the detection signal of detected vibrations by the sensor 139, and performs frequency analysis including Fast Fourier Transform (FFT), for example. Specifically, the electrical signal converter 150 acquires the feature values of vibrations such as the frequency, acceleration, vibration time, and power spectrum of the vibrations. The power spectrum of vibrations can be acquired by converting the size of the vibration number of the vibrations. The electrical signal converter 150 outputs the result of frequency analysis to the comparison unit 151.

The comparison unit 151 determines (identifies) the factor of occurrence the factor of occurrence of abnormal vibrations based on the result of frequency analysis at the electrical signal converter 150. Specifically, the comparison unit 151 compares the feature value of vibrations with a predetermined threshold, and determines the factor of occurrence of an abnormality when the feature value is a predetermined threshold or more. A plurality of predetermined thresholds is set corresponding to the type of abnormality, and the plurality of predetermined thresholds is stored in the data storage unit 204. The comparison unit 151 outputs the determined result of the factor of occurrence of an abnormality to the control unit 153.

The determining unit 152 receives a detection signal from the detector 156 that detects the state of the drive unit 154 (e.g. the number of revolutions and the like), and determines whether the state of the drive unit 154 is normal. The determining unit 152 outputs information indicating the determined state of the drive unit 154 to the control unit 153.

The control unit 153 acquires the determined result of the factor of occurrence of abnormal vibrations from the comparison unit 151, decides the state transition of the automatic analyzer 1 based on the determined result, and transmits the instruction of the operation to the drive unit 154. Moreover, the control unit 153 stores the determined result received from the comparison unit 151 and the determined result received from the determining unit 152 in the data storage unit 204.

### <Abnormality identification method for stirring mechanism>

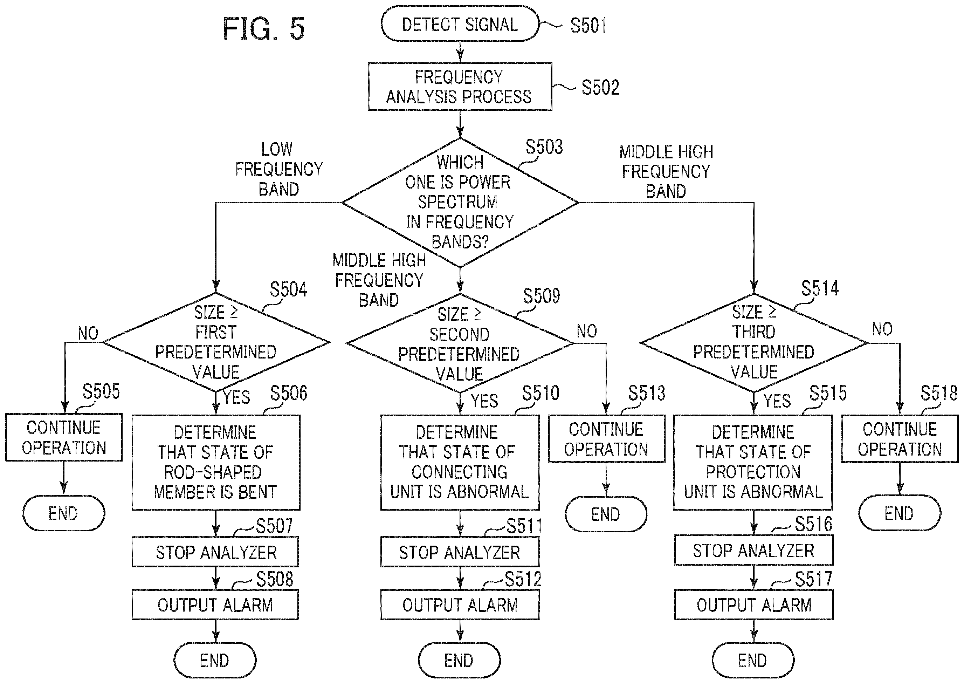

Fig. 5 is a flowchart illustrating an abnormality identification process executed by the operation control unit 201.

### (STEP S501)

The electrical signal converter 150 receives an input of the detection signal of vibrations detected by the sensor 139.

### (STEP S502)

The electrical signal converter 150 executes a frequency analysis process for the detection signal of vibrations.

### (STEP S503)

The comparison unit 151 determines whether the frequency of vibrations is in a low-frequency band (e.g. 500 Hz or less) or in a middle-high-frequency band (greater than 500 Hz). When the frequency is in the low-frequency band, the process goes to Step S504. When the frequency is in the middle-high-frequency band, the process goes to Steps S509 and S514.

### (STEP S504)

When it is determined that the vibrations are in the low-frequency band, it is known that there is a possibility of an abnormal state in which the rod-shaped member 141 bends. Note that the bend of the rod-shaped member 141 means a state in which the long direction of the rod-shaped member 141 is not at a right angle to the long direction of the base unit 143, or a state in which the rod-shaped member 141 bends at the midway point. The comparison unit 151 determines whether the size of vibrations (e.g. the power spectrum) in the low-frequency band is a first predetermined value or more.

The size of vibrations depends on the number of revolutions and the degree of bend of the rod-shaped member 141, and the number of revolutions is a preset fixed value. Thus, when vibrations are large, it can be determined that the rod-shaped member 141 is in a bend state. The first predetermined value can be set to a value corresponding to a bend angle of the rod-shaped member 141 at which the occurrence of the influence starts on analysis accuracy, for example. That is, when the degree of the bend of the rod-shaped member 141 is ignorable and does not affect analysis accuracy, the size of vibrations is below the first predetermined value. When the size of vibrations is the first predetermined value or more (YES), the process goes to Step S506. When the size of vibrations is below the first predetermined value (NO), the process goes to Step S505.

### (STEP S505)

When the size of vibrations in the low-frequency band is below the first predetermined value, the comparison unit 151 determines that there is no abnormality, and outputs the determined result to the control unit 153. The control unit 153 maintains the operating state of the automatic analyzer 1.

### (STEP S506)

When the size of vibrations in the low-frequency band is the first predetermined value or more, the comparison unit 151 determines that the rod-shaped member 141 is in the bend state and has an abnormality , and outputs the determined result to the control unit 153.

### (STEP S507)

The control unit 153 performs the state transition of the automatic analyzer 1 such that the operation of the automatic analyzer 1 is stopped.

### (STEP S508)

The control unit 153 creates an alarm notifying that the rod-shaped member 141 bends, and outputs the alarm to the user interface 203. The alarm that notifies the bend of the bend of the rod-shaped member 141 may be a notification screen including text that urges the user to eliminate the bend of the rod-shaped member 141 or to confirm the state of the rod-shaped member 141.

### (STEP S509)

The comparison unit 151 determines whether the size of vibrations (e.g. the power spectrum) in the middle-high-frequency band is a second predetermined value or more. The second predetermined value can be set to a value corresponding to the assembly state of the connecting part 140 the occurrence of the influence starts on analysis accuracy, for example. When the size of vibrations is the second predetermined value or more (YES), the process goes to Step S510. When the size of vibrations is below the second predetermined value (NO), the process goes to Step S513.

### (STEP S510)

When the size of vibrations in the middle-high-frequency band is the second predetermined value or more, the comparison unit 151 determines that the state of the connecting part 140 of the rod-shaped member 141 to the base unit 143 has an abnormality (e.g. assembly is insufficient and the like), and outputs the determined result to the control unit 153.

### (STEP S511)

The control unit 153 performs the state transition of the automatic analyzer 1 such that the operation of the automatic analyzer 1 is stopped.

### (STEP S512)

The control unit 153 creates an alarm notifying that the connecting part 140 has an abnormality, and outputs the result to the user interface 203. This alarm that notifies an abnormality of the connecting part 140 may be a notification screen including text that urges the user to confirm the state of the connecting part 140.

### (STEP S513)

When the size of vibrations in the middle-high-frequency band is below the second predetermined value, the comparison unit 151 determines that there is no abnormality, and outputs the determined result to the control unit 153. The control unit 153 maintains the operating state of the automatic analyzer 1.

### (STEP S514)

The comparison unit 151 determines whether the size of vibrations (e.g. the power spectrum) in the middle-high-frequency band is a third predetermined value or more. The third predetermined value can be set to a value corresponding to the assembly state of the protector 144 the occurrence of the influence starts on analysis accuracy, for example. When the size of vibrations is the third predetermined value or more (YES), the process goes to Step S515. When the size of vibrations is below the third predetermined value (NO), the process goes to Step S518.

### (STEP S515)

When the size of vibrations in the middle-high-frequency band is the third predetermined value or more, the comparison unit 151 determines that the state of the protector 144 has an abnormality, (e.g. assembly is insufficient and the like), and outputs the determined result to the control unit 153.

### (STEP S516)

The control unit 153 performs the state transition of the automatic analyzer 1 such that the operation of the automatic analyzer 1 is stopped.

### (STEP S517)

The control unit 153 creates an alarm notifying that the protector 144 has an abnormality, and outputs the result to the user interface 203. This alarm that notifies an abnormality of the connecting part 144 may be a notification screen including text that urges the user to confirm the state of the connecting part 144.

### (STEP S518)

When the size of vibrations in the middle-high-frequency band is below the third predetermined value, the comparison unit 151 determines that there is no abnormality, and outputs the determined result to the control unit 153. The control unit 153 maintains the operating state of the automatic analyzer 1.

As described above, an abnormality of the stirring mechanism 136 can be determined by the frequency band of vibrations and the size of vibrations. In the process described above, when the size of vibrations is below the first predetermined value, i.e., when the degree of the bend does not affect the analysis accuracy, the size is ignored, and when the size of vibrations in the low-frequency band becomes the first predetermined value or more, i.e., the size is in a state in which the size is considered to affect analysis accuracy, and then stopping the analyzer and the outputting an alarm are managed. The first predetermined value is a criterion that determines the management. With such a configuration, it is possible to expect a technical effect that obviates time losses caused by stopping the analyzer with no influence on analysis accuracy. The same thing applies to the second predetermined value and the third predetermined value.

Here, the experiment conducted by the present inventors reveals that the first predetermined value becomes greater than the second predetermined value and the third predetermined value. The relationship between the size of the second predetermined value and the size of the third predetermined value varies depending on the individual products of the automatic analyzer and the state of the assembly of the stirring mechanism 136.

### <Specific examples of abnormality of stirring mechanism>

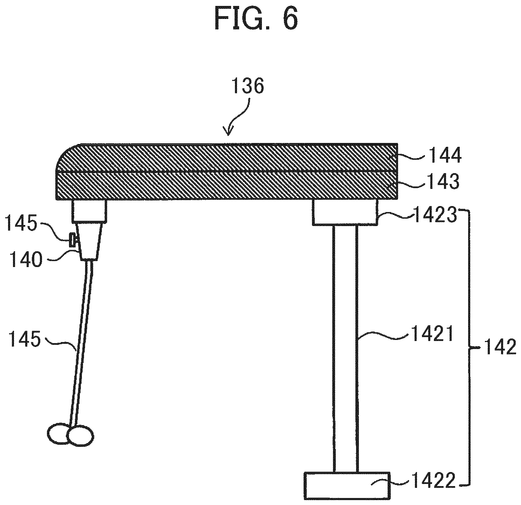

Fig. 6 is a diagram illustrating the state of the stirring mechanism 136 when the rod-shaped member 141 bends. For example, when the size of vibrations in the low-frequency band has the first predetermined value or more, the rod-shaped member 141 bends as illustrated in Fig. 6. In this case, there is a possibility that the analysis accuracy is degraded or the automatic analyzer 1 is contaminated due to an increase in the amount of wash water brought from the vessel holding unit 138 to another site by the rod-shaped member 141 or due to an increase in the scattering amount at the time of rotating the rod-shaped member 141. Therefore, by stopping the operation of the automatic analyzer 1 to notify the user of the state of the rod-shaped member 141 through an alarm to urge the user to make confirmation or a repair, thus it is possible to suppress the influence on the analyzer, the user, analyzed results, and the like.

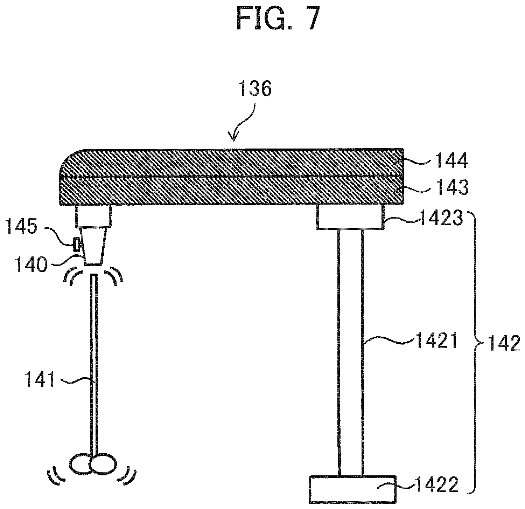

Fig. 7 is a diagram illustrating the state of the stirring mechanism 136 in the case in which the connection between a connecting part 140 and a rod-shaped member141 has an abnormality. For example, when the size of vibrations in the middle-high-frequency band is the second predetermined value or more, the connection of the connecting part 140 to the rod-shaped member 141 has an abnormality as illustrated in Fig. 7. In this case, there is a possibility that the automatic analyzer 1 fails due to a fall of the rod-shaped member 141 or the connecting component 145. Therefore, by stopping the operation of the automatic analyzer 1 to notify the user of a connection abnormality of the connecting part 140 through an alarm to urge to make confirmation or a repair, thus it is possible to suppress the influence on the analyzer, the user, analyzed results, and the like.

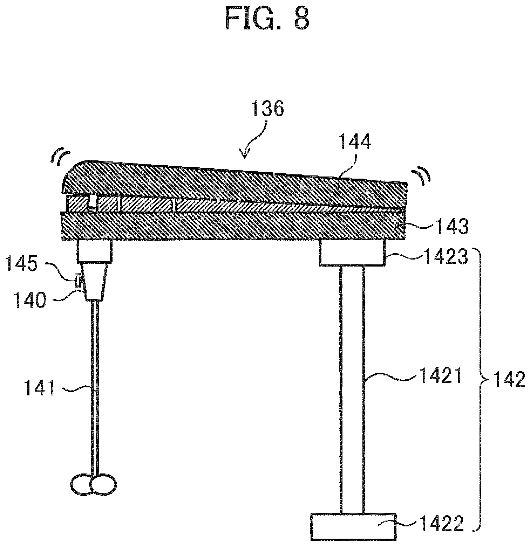

Fig. 8 is a diagram illustrating the state of the stirring mechanism 136 in the case in which the connection between a protector 144 and a base unit 143 has an abnormality. For example, when the size of vibrations in the middle-high-frequency band is the third predetermined value or more, the connection of the protector 144 to the base unit 143 has an abnormality as illustrated in Fig. 8. In this case, there is a possibility that the automatic analyzer 1 fails due to a fall of the protector 144 or the exposure of the inside of the base unit 143. Therefore, by stopping the operation of the automatic analyzer 1 to notify the user of a connection abnormality of the protector 144 through an alarm to urge to make confirmation or a repair, thus it is possible to suppress the influence on the analyzer, the user, analyzed results, and the like.

As described above, the determination of an abnormality of the stirring mechanism 136 is performed at the time of the reset operation of the automatic analyzer 1, this enables correcting an abnormal state before performing the analysis operation, and thus it is possible to obviate the degradation of analysis accuracy at the time of the analysis operation.

### <Modifications of first embodiment>

In the first embodiment, the description is made in which the sensor 139 is provided on the stirring mechanism 136 and an abnormality of the stirring mechanism 136 is determined. Alternatively, a configuration may be provided in which the sensor 139 is provided on a dispensing probe such as the sample probe 103 and the reagent probe 113, and an abnormality of the dispensing probe is determined similar to the method described above.

In the first embodiment, the description is made in which in regard to the timing of performing the determination of an abnormality of the stirring mechanism 136, the determination is made within the reset operating time in the automatic analyzer 1 . Alternatively, the determination of an abnormality of the stirring mechanism 136 may be performed at the time of another given operation. However, an abnormality is determined at a timing other than the time of the analysis operation, and this enables a reduction in the influence on the analysis accuracy.

Since the method of using the automatic analyzer 1 varies depending on users, a configuration may be provided in which pluralities of values are stored in advance in the data storage unit 204 regarding the first predetermined value, the second predetermined value, and the third predetermined value, and the user can selectively set thresholds on the GUI screen of the user interface 203. Moreover, a configuration may be provided in which when there are pluralities of frequency bands of vibrations that affect analyzed results, thresholds for the size of vibrations or time periods can be set by the user on the GUI screen in the frequency bands.

The mechanisms of the automatic analyzer 1 have variations (manufacture variations, assembly variations, and the like) for each analyzer product. Therefore, the control unit 153 may perform control of deciding the target amplitude value of the rod-shaped the vibrations of the stirring mechanism 136 corresponding to the analyzer unique variations, i.e., the allowable vibration width of the tip end part of the rod-shaped member 141.

In the first embodiment, the description is made in which one sensor 139 is provided on the stirring mechanism 136. Alternatively, a plurality of sensors may be provided on the stirring mechanism 136, and an abnormality may be determined by the combination of the detection signals of the plurality of sensors.

As described above, the description is made in which the method of determining an abnormality of the stirring mechanism 136 in the automatic analyzer 1. The technique of the present embodiment is also applicable to analyzers other than the automatic analyzer (e.g. clinical inspection apparatuses).

### <Summary of first embodiment>

As described above, the automatic analyzer 1 according to the present embodiment includes the rod-shaped member 141 that stirs a stirred solution, the stirring mechanism 136 having the moving mechanism 142 that applies power to the rod-shaped member and the drive unit 154 (power source), the sensor 139 that is provided on the stirring mechanism 136 and detects the vibrations of the stirring mechanism 136, and the operation control unit 201 (processor) that determines the state of the stirring mechanism 136 based on the detection signal of vibrations from the sensor 139. The operation control unit 201 calculates the feature value of the vibrations based on the detection signal of vibrations, and determines that the rod-shaped member 141 bends when the feature value of the vibrations is the first predetermined value or more. As described above, a bend of the stirring mechanism 136 is determined from the vibrations of the stirring mechanism 136, and thus it is possible to obviate the degradation of analysis accuracy or the contamination of the analyzer due to scattering the stirred solution. Moreover, according to the technique of the present embodiment, it is unnecessary for the user to check an abnormality of the stirring mechanism 136, which eliminates oversights of an abnormality and time and effort by the user. As a result, since the analysis operation of a sample is not performed as an abnormal state, it is possible to obviate the degradation of analysis accuracy.

### [Modifications]

The present disclosure is not limited to the foregoing embodiment, and includes various modifications. For example, the foregoing embodiment is described in detail for easily understanding the present disclosure, which does not necessarily include all the configurations described above. Moreover, a part of an embodiment can be replaced with the configuration of another embodiment. Furthermore, the configuration of another embodiment can be added to the configuration of an embodiment as well. In addition, in regard to a part of the configurations of the embodiments, a part of the configuration of another embodiment can be added, removed, or replaced as well.

### List of Reference Signs

1: automatic analyzer
100: housing
136: stirring mechanism (stirring device)
138: vessel holding unit
139: sensor
140: connecting part
141: rod-shaped member
142: moving mechanism (power source)
143: base unit
144: protector
145: connecting component
200: controller (processor)

All the publications, patents, and patent applications cited in the present specification are to be incorporated into the present specification as they are by citations.

## Claims

1. An automatic analyzer comprising:
a stirring device having a rod-shaped member that stirs a stirred solution and a power source that applies power to the rod-shaped member;
a sensor that detects vibrations of the stirring device; and
a processor that determines a state of the stirring device based on a detection signal of the vibrations from the sensor,
wherein the processor calculates a feature value of the vibrations based on the detection signal of the vibrations, and the processor determines that the rod-shaped member bends when the feature value of the vibrations is a first predetermined value or more.

2. The automatic analyzer according to claim 1,
wherein the processor determines that a connecting part of the rod-shaped member to the power source has an abnormality when the feature value of the vibrations is a second predetermined value or more.

3. The automatic analyzer according to claim 1, further comprising:
a base unit that supports the power source and to which the rod-shaped member is connected; and
a protector that is mounted on the base unit and protects the base unit,
wherein the processor determines that the protector has an abnormality when the feature value of the vibrations is a third predetermined value or more.

4. The automatic analyzer according to claim 1,
wherein the processor performs frequency analysis of the detection signal of the vibrations, and the processor calculates a size of a power spectrum of the vibrations as a feature value of the vibrations.

5. The automatic analyzer according to claim 1,
wherein: when determining that the rod-shaped member bends, the processor stops an operation of the automatic analyzer; and
when determining that the feature value of vibrations is below a first predetermined value and the rod-shaped member does not bend, the processor continues an operation of the automatic analyzer.

6. The automatic analyzer according to claim 1, further comprising an output device connected to the processor,
wherein when determining that the rod-shaped member bends, the processor outputs an alarm from the output device.

7. The automatic analyzer according to claim 1,
wherein when a frequency of the vibrations is in a low-frequency band, the processor compares a feature value of the vibrations with the first predetermined value.

8. The automatic analyzer according to claim 2,
wherein when a frequency of the vibrations is in a middle-high-frequency band, the processor compares a feature value of the vibrations with the second predetermined value.

9. The automatic analyzer according to claim 3,
wherein when a frequency of the vibrations is in a middle-high-frequency band, the processor compares a feature value of the vibrations with the third predetermined value.

10. The automatic analyzer according to claim 1,
wherein the processor executes determination at time of a reset operation of the automatic analyzer.

11. The automatic analyzer according to claim 1,
wherein the sensor is provided on the stirring device.

12. An analysis method executed by a processor of an automatic analyzer,
wherein: the automatic analyzer includes
a stirring device having a rod-shaped member that stirs a stirred solution and a power source that applies power to the rod-shaped member, and
a sensor that detects vibrations of the stirring device; and
the method includes
receiving a detection signal of the vibrations of the stirring device from the sensor;
calculating a feature value of the vibrations based on the detection signal of the vibrations; and
comparing the feature value of the vibrations with a first predetermined value to determine that the rod-shaped member bends when the feature value of the vibrations is the first predetermined value or more.
